# FASCICULE DE BREVET EUROPEEN

(11) **EP 3 933 749 B1**
(45) Date de publication et mention de la délivrance du brevet: **20.08.2025**
(21) Numéro de dépôt: 21179779.0
(22) Date de dépôt: 16.06.2021
(51) Int. Cl.: G06T 3/40, H04N 9/64

(54) **PROCÉDÉ DE CONVERSION D'UNE IMAGE NUMÉRIQUE**
VERFAHREN ZUR UMWANDLUNG EINES DIGITALEN BILDS
METHOD FOR CONVERTING A DIGITAL IMAGE

(30) Priorité: 30.06.2020 FR 2006903
(43) Date de publication de la demande: 05.01.2022
(73) Titulaire: STMICROELECTRONICS (GRENOBLE 2) SAS, 38000 Grenoble (FR); STMicroelectronics (Rousset) SAS, 13790 Rousset (FR)
(72) Inventeur: CLOSS, Julien, 38000 Grenoble (FR); DELORME, Jean-Michel, 38080 L'Isle D'Abeau (FR); FAUVARQUE, Daniel, 38920 Crolles (FR); FOLLIOT, Laurent, 06620 GOURDON (FR); LEGRAIN, Guillaume, 38000 Grenoble (FR)
(74) Mandataire: Casalonga

(56) Documents cités:
- NAVSUDA: "add camera example with STM32F746NG-DISCO board . ARM-software/ML-examples", 6 March 2019 (2019-03-06), Github.com, pages 1 - 6, XP055785952, Retrieved from the Internet <URL:https://github.com/ARM-software/ML-examples/commit/0bc5caa22671e5e657ba0eb4cde464476cfb40d3#diff-0386d05f95bed68f4b82e4f97810fcc4c165edb27b3e060ca54f98824f52bfda> [retrieved on 20210315]
- ARM LIMITED: "Image recognition on Arm Cortex-M with CMSIS-NN", ARM DEVELOPER, 1 April 2019 (2019-04-01), pages 1 - 17, XP055785957, Retrieved from the Internet <URL:https://developer.arm.com/-/media/Arm%20Developer%20Community/PDF/Image%20recognition%20on%20Arm%20Cortex-M%20with%20CMSIS-NN.pdf?revision=9c17f260-d544-400a-93ce-28ce18f98f51> [retrieved on 20210315]
- CROCHIERE R E ET AL: "INTERPOLATION AND DECIMATION OF DIGITAL SIGNALS - A TUTORIAL REVIEW", PROCEEDINGS OF THE IEEE, IEEE. NEW YORK, US, vol. 69, no. 3, 1 March 1981 (1981-03-01), pages 300 - 331, XP000615159, ISSN: 0018-9219

## Description

### DOMAINE DE L'INVENTION

La présente invention concerne, de façon générale, les procédés de conversion d'images numériques, en particulier pour adapter le format d'une image numérique échangée entre deux dispositifs n'utilisant pas le même format d'image numérique. Dans une application préférée de l'invention l'un des dispositifs est un dispositif d'acquisition d'image et l'autre dispositif est un réseau de neurones.

### ETAT DE LA TECHNIQUE

Une image numérique désigne une image stockée sous forme binaire. Elle est constituée d'un ensemble de pixels ou points. Les pixels sont organisés en lignes et colonnes. A chaque pixel est associée une couleur.

L'image numérique est représentée sous la forme d'une matrice de valeurs. Chaque valeur est associée à un pixel et représente la couleur du pixel. La matrice comprend autant de lignes que l'image a de lignes. La matrice comprend autant de colonnes que l'image a de colonnes.

La couleur du pixel est généralement décomposée en trois composantes primaires. Ces trois composantes primaires permettent de retrouver la couleur du pixel par synthèse additive. Ces trois composantes primaires sont : une composante rouge, une composante verte et une composante bleue. La valeur associée à chaque pixel est alors composée de trois valeurs qui correspondent respectivement à l'intensité de chaque composante primaire. L'intensité de chaque composante primaire est représentée par un nombre déterminé de bits. On peut également utiliser l'expression codée à la place de l'expression représentée.

Par exemple, dans le format RGB565 la composante rouge est représentée par 5 bits, la composante verte par 6 bits et la composante bleue par 5 bits. Chaque couleur est ainsi représentée par 16 bits ou 2 octets.

Dans le format RGB888 la composante rouge est représentée par 8 bits, la composante verte par 8 bits et la composante bleue par 8 bits. Chaque couleur est ainsi représentée par 24 bits ou 3 octets.

Une image numérique bidimensionnelle a une largeur et une hauteur. Le format de l'image numérique est défini par différents paramètres parmi lesquels :
- le nombre de pixels en largeur de l'image numérique,
- le nombre de pixels en hauteur de l'image numérique et
- le nombre de bits utilisés pour représenter la valeur de la couleur de chaque pixel.

Le couple (nombre de pixels en largeur de l'image numérique ; nombre de pixels en hauteur de l'image numérique) est généralement appelé définition de l'image numérique. La définition est notée X*Y où X représente le nombre de pixels en largeur de l'image numérique et Y le nombre de pixels en hauteur de l'image numérique.

Lorsqu'un dispositif d'acquisition d'image et un dispositif utilisant l'image ne fonctionnent pas avec le même format d'image numérique, ces deux dispositifs ne peuvent pas fonctionner ensemble. On réalise alors une conversion de l'image numérique.

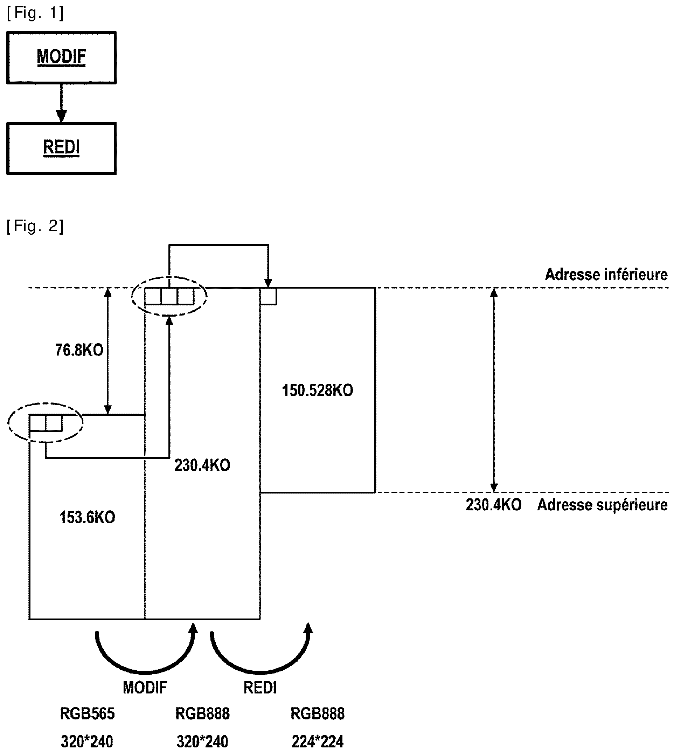

La figure 1 représente un procédé connu de conversion d'une image numérique. Ce procédé de conversion comprend une étape de modification MODIF d'un format des pixels d'une image numérique initiale, afin d'obtenir une image numérique intermédiaire. Ce procédé comprend une étape de redimensionnement REDI de l'image numérique intermédiaire, afin d'obtenir une image numérique convertie.

Dans ce procédé de conversion, l'étape de modification MODIF est réalisée préalablement à l'étape de redimensionnement REDI.

Ce procédé de conversion permet donc d'alimenter un dispositif tiers avec une image numérique acquise par le dispositif d'acquisition, dans le cas où le dispositif d'acquisition d'image et le dispositif tiers ne fonctionnent pas avec le même format d'image numérique.

L'étape de modification MODIF d'un format des pixels de l'image numérique initiale permet de modifier le nombre de bits permettant de représenter les couleurs des pixels. Si la couleur d'un pixel est décomposée en trois composantes primaires (rouge, verte et bleue), l'étape de modification MODIF d'un format des pixels de l'image numérique initiale permet de modifier indépendamment pour chaque composante primaire le nombre de bits permettant de représenter la composante primaire.

L'étape de redimensionnement REDI de l'image numérique intermédiaire est réalisée par la modification du nombre de pixels de l'image numérique intermédiaire. Cette étape de redimensionnement REDI peut être réalisée par la diminution du nombre de pixels en largeur de l'image numérique intermédiaire et/ou la diminution du nombre de pixels en hauteur de l'image numérique intermédiaire.

La figure 2 illustre un exemple d'utilisation du procédé connu de la figure 1.

Dans cette utilisation la modification MODIF du format des pixels de l'image numérique initiale est réalisée d'un format RGB565 à un format RGB888. Ainsi le nombre de bits utilisés pour représenter les couleurs est augmenté. Si la taille de l'image numérique initiale est de L kilooctets (ko) alors la taille de l'image numérique intermédiaire est de L*1.5 kilooctets.

Dans l'exemple d'utilisation de la figure 2, l'étape de redimensionnement REDI permet à partir d'une image numérique intermédiaire ayant une résolution de 320*240 (résolution des images numériques généralement acquises par un dispositif d'acquisition ACQUI de type caméra) d'obtenir une image numérique convertie ayant une résolution de 224*224 (résolution des images numériques généralement utilisées par un réseau de neurones).

Durant les étapes de modification MODIF et redimensionnement REDI une même zone d'une mémoire MEM est utilisée pour stocker l'image numérique initiale, l'image numérique intermédiaire et l'image numérique convertie.

Afin de minimiser la taille de la zone de la mémoire MEM, les valeurs des pixels de l'image numérique intermédiaire sont écrites à la place de valeurs des pixels de l'image numérique initiale. Afin de minimiser la taille de la zone mémoire MEM, les valeurs des pixels de l'image numérique convertie sont écrites à la place de valeurs des pixels de l'image numérique initiale ou à la place de valeurs des pixels de l'image numérique intermédiaire.

Dans l'exemple d'utilisation de la figure 2, la zone de la mémoire MEM a une taille supérieure à la taille de l'image numérique initiale et à la taille de l'image numérique convertie. En effet l'image numérique initiale présente une résolution de 320*240 et la couleur de chaque pixel est représentée par 2 octets. L'image numérique initiale a donc une taille de 153.6 kilooctets. L'image numérique intermédiaire présente une résolution de 320*240 et la couleur de chaque pixel est représentée par 3 octets. L'image numérique intermédiaire a donc une taille de 230.4 kilooctets. L'image numérique convertie présente une résolution de 224*224 et la couleur de chaque pixel est représentée par 3 octets. L'image numérique convertie a donc une taille de 150.6 kilooctets. Donc dans ce cas la taille de la zone mémoire MEM doit être de 230.4 kilooctets, afin de pouvoir stocker l'image numérique intermédiaire.

En conséquence, pour réaliser la conversion entre une image numérique initiale de taille 153.6 kilooctets et une image numérique convertie de taille 150.6 kilooctets, le procédé de conversion connu nécessite, dans l'exemple d'utilisation de la figure 2, que la zone de la mémoire MEM soit de 230.4 kilooctets.

Le programme informatique ARM-Software, dont le code source est disponible sur GitHub.com à l'adresse https://github.com/ARM-software/ML-examples et auquel fait référence la publication « Image recognition on Arm Cortex-M with CMSIS-NN », par Arm Limited, divulgue un procédé de conversion de format d'image, d'une image RGB565 vers RGB888 dans laquelle l'image est redimensionnée puis convertie.

Il y a donc un besoin pour un procédé de conversion d'une image numérique nécessitant une quantité de mémoire plus faible.

### EXPOSE DE L'INVENTION

L'invention permet de pallier les inconvénients précités en proposant un procédé de conversion d'une image numérique initiale en une image numérique convertie, l'image numérique initiale étant constituée d'un ensemble de pixels, les pixels étant associés respectivement à des couleurs, l'image numérique initiale étant acquise par un dispositif d'acquisition, l'image numérique convertie étant utilisable par un réseau de neurones, le procédé comprenant les étapes suivantes, redimensionnement de l'image numérique initiale pour obtenir une image numérique intermédiaire, le redimensionnement étant réalisé par la réduction d'un nombre de pixels de l'image initiale, modification d'un format d'un des pixels de l'image numérique intermédiaire pour obtenir l'image numérique convertie, la modification étant réalisée par augmentation d'un nombre de bits utilisés pour représenter la couleur du pixel. Le redimensionnement est réalisé préalablement à la modification.

Ce procédé offre l'avantage de pouvoir limiter la quantité de mémoire nécessaire à sa mise en œuvre.

Dans un mode de réalisation l'image numérique initiale est stockée au début d'une zone d'une mémoire, le redimensionnement est réalisé en parcourant la zone de la mémoire et en incrémentant des adresses de la zone de la mémoire. La modification est réalisée en parcourant la zone de la mémoire et en décrémentant les adresses de la zone de la mémoire.

Dans un mode de réalisation l'image numérique initiale est stockée à la fin d'une zone d'une mémoire, le redimensionnement est réalisé en parcourant la zone de la mémoire et en décrémentant des adresses de la zone de la mémoire. La modification est réalisée en parcourant la zone de la mémoire et en incrémentant les adresses de la zone de la mémoire.

Dans un mode de réalisation le redimensionnement de l'image numérique initiale est réalisé par décimation des pixels de l'image numérique initiale.

Dans un mode de réalisation le redimensionnement de l'image de l'image numérique initiale est réalisé par filtrage passe-bas de l'image numérique initiale puis par décimation des pixels de l'image numérique initiale.

Un autre aspect de l'invention est une puce électronique configurée pour mettre en œuvre le procédé de conversion présenté ci-dessus.

Dans un mode de réalisation la puce électronique comprend une unité de traitement et une mémoire. L'unité de traitement est configurée pour mettre en œuvre le procédé de conversion présenté ci-dessus.

Un autre aspect de l'invention est un système comprenant un dispositif d'acquisition d'une image numérique initiale, un réseau de neurones utilisant une image numérique convertie, et une puce électronique apte à la conversion de l'image numérique initiale en l'image numérique convertie.

Un autre aspect de l'invention est un produit programme d'ordinateur comprenant des instructions de code de programme qui lorsqu'elles sont exécutées par une puce électronique permettent la mise en œuvre du procédé de conversion présenté ci-dessus.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
[Fig. 1] La figure 1 représente un procédé de conversion connu.
[Fig. 2] La figure 2 représente une utilisation du procédé de conversion connu.
[Fig. 3] La figure 3 représente un dispositif selon un aspect de l'invention.
[Fig. 4] La figure 4 représente d'une autre manière le dispositif selon un aspect de l'invention.
[Fig. 5] La figure 5 représente un procédé de conversion selon un aspect de l'invention.
[Fig. 6] La figure 6 représente une utilisation d'un premier mode de réalisation du procédé de conversion de l'invention.
[Fig. 7] La figure 7 représente une utilisation d'un deuxième mode de réalisation du procédé de conversion de l'invention.
[Fig. 8] La figure 8 représente d'une autre manière le procédé de conversion de l'invention.

### DESCRIPTION DETAILLEE DE L'INVENTION

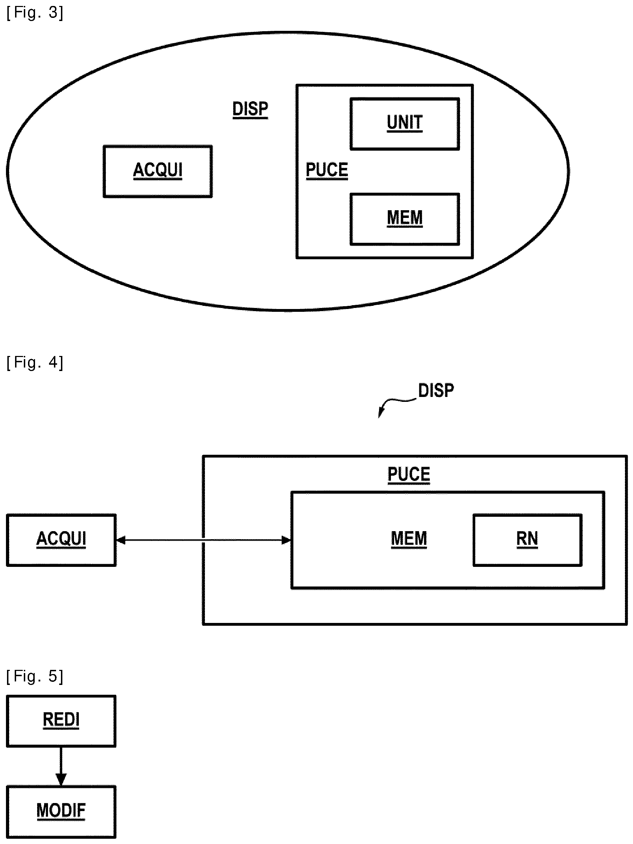

La figure 3 représente un dispositif DISP comprenant un dispositif d'acquisition ACQUI d'une image numérique et une puce électronique PUCE. La puce électronique PUCE comprend une unité de traitement UNIT et une mémoire MEM. La mémoire MEM permet de stocker des valeurs dans des emplacements associés respectivement à des adresses.

Le dispositif DISP peut être un dispositif utilisateur, par exemple un téléphone intelligent (« smartphone » en anglais), une tablette informatique, un ordinateur.

L'unité de traitement UNIT est configurée pour mettre en œuvre un procédé de conversion d'une image numérique initiale en une image numérique convertie.

L'image numérique initiale est obtenue du dispositif d'acquisition ACQUI.

L'image numérique convertie est utilisée par un réseau de neurones RN (non représenté sur la figure 3).

Les images numériques (initiale et convertie) sont représentées sous la forme de matrices de valeurs. Chaque valeur est associée à un pixel et représente la couleur du pixel. La matrice de chaque image comprend autant de lignes que l'image a de lignes. La matrice comprend autant de colonnes que l'image a de colonnes.

L'image numérique est stockée dans une zone de la mémoire MEM. Ce stockage est réalisé en concaténant les éléments de la matrice de l'image numérique par lignes ou par colonnes puis en stockant ces éléments dans la zone de la mémoire MEM.

La zone de la mémoire MEM comprend une borne inférieure associée à une adresse dite adresse inférieure. La zone de la mémoire MEM comprend une borne supérieure associée à une adresse dite adresse supérieure.

La figure 4 représente d'une autre manière le dispositif DISP. La mémoire MEM de la puce PUCE est utilisée également pour stocker le réseau de neurones RN utilisant l'image numérique convertie qui a été acquise par le dispositif d'acquisition ACQUI puis qui a été convertie. Ce réseau de neurones RN peut être stocké dans la zone de la mémoire MEM utilisée pour la conversion de l'image numérique initiale.

La figure 5 représente un procédé de conversion de l'invention. Le procédé de conversion de l'invention est mis en œuvre par exemple par l'unité de traitement UNIT. Le procédé de conversion de l'invention comprend une étape de redimensionnement REDI de l'image numérique initiale, afin d'obtenir une image numérique intermédiaire. Le procédé de conversion de l'invention comprend une étape de modification MODIF d'un format des pixels de l'image numérique intermédiaire, afin d'obtenir une image numérique convertie.

Dans le procédé de conversion de l'invention l'étape de redimensionnement REDI est réalisée préalablement à l'étape de modification MODIF.

L'étape de redimensionnement REDI de l'image numérique initiale est réalisée par la modification du nombre de pixels de l'image numérique initiale. Cette étape de redimensionnement REDI peut être réalisée par la diminution du nombre de pixels en largeur de l'image numérique initiale et/ou la diminution du nombre de pixels en hauteur de l'image numérique initiale.

Cette réduction peut être réalisée par décimation des pixels de l'image numérique initiale. La décimation est aussi connue sous l'expression de sous-échantillonnage. L'échantillonnage d'une image physique consiste à prélever des valeurs représentant la couleur de pixels de l'image physique. Ce prélèvement est réalisé avec un intervalle défini entre les pixels. L'échantillonnage de l'image physique permet d'obtenir une image numérique. La décimation d'une image numérique consiste à diminuer le nombre de valeurs prélevées. Durant la décimation on ne garde dans l'image numérique intermédiaire qu'un certain nombre de pixels de l'image numérique initiale. Par exemple on ne garde qu'un pixel tous les M pixels, où M est nommé le facteur de décimation.

Préalablement à la décimation, l'étape de redimensionnement REDI peut comprendre un filtrage passe-bas de l'image numérique initiale.

L'étape de modification MODIF d'un format des pixels de l'image numérique intermédiaire permet de modifier le nombre de bits utilisés pour représenter les couleurs respectivement associées aux pixels. Si la couleur du pixel est décomposée en trois composantes primaires (rouge, verte et bleue), l'étape de modification MODIF d'un format des pixels de l'image numérique initiale permet de modifier indépendamment pour chaque composante primaire le nombre de bits utilisés pour représenter cette composante primaire.

Dans un premier mode de réalisation du procédé de conversion de l'invention, l'étape de redimensionnement REDI est réalisée en parcourant la zone de la mémoire MEM dans un premier sens et l'étape de modification MODIF est réalisée en parcourant la zone de la mémoire MEM dans un second sens. Le premier sens est identique au second sens.

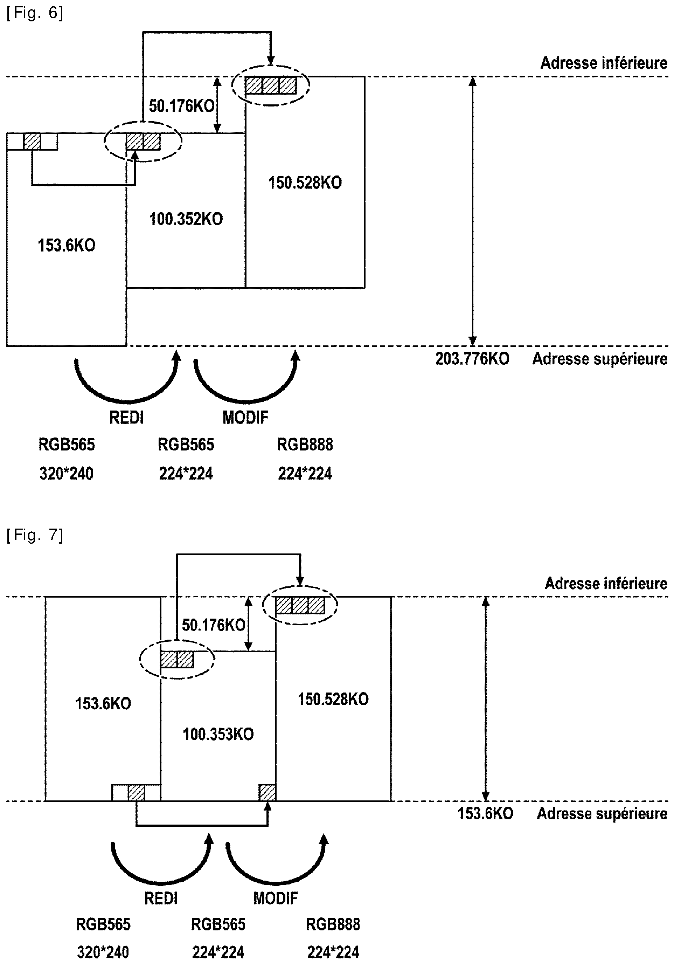

La figure 6 illustre un exemple d'utilisation du premier mode de réalisation du procédé de conversion de l'invention représenté figure 5.

Dans l'exemple d'utilisation de la figure 6, l'étape de redimensionnement REDI permet, à partir d'une image numérique initiale ayant une résolution de 320*240 (résolution des images numériques généralement acquises par un dispositif d'acquisition ACQUI de type caméra), d'obtenir une image numérique intermédiaire ayant une résolution de 224*224 (résolution des images numériques généralement utilisées par le réseau de neurones RN).

Dans l'exemple d'utilisation de la figure 6, l'étape de modification MODIF du format des pixels de l'image numérique intermédiaire est réalisée d'un format RGB565 à un format RGB888. La valeur de la couleur de chaque pixel est alors représentée et stockée dans la zone de la mémoire MEM par 3 octets après la modification MODIF de format, et non plus par 2 octets comme avant la modification MODIF de format. Donc l'étape de modification MODIF du format est réalisée par augmentation d'un nombre de bits utilisés pour représenter les couleurs des pixels. Dans cet exemple d'utilisation, si la taille de l'image numérique intermédiaire est de L kilooctets alors la taille de l'image numérique convertie est de L*1.5 kilooctets, du fait de la modification MODIF du format des pixels.

Dans l'exemple d'utilisation de la figure 6, l'image numérique initiale est stockée dans la zone de la mémoire MEM de manière à ce que les valeurs de l'image numérique initiale soient stockées en continu jusqu'à l'adresse supérieure. Ainsi l'image numérique initiale est stockée à la fin de la zone de la mémoire MEM.

Dans l'exemple d'utilisation de la figure 6 l'étape de redimensionnement REDI est réalisée en premier. L'image numérique intermédiaire obtenue après redimensionnement est stockée dans la zone de la mémoire MEM de manière à ce que l'adresse du début de l'image numérique intermédiaire soit proche ou identique à l'adresse du début de l'image numérique initiale.

Dans l'exemple d'utilisation de la figure 6 l'étape de redimensionnement REDI est réalisée à partir de l'adresse inférieure et en incrémentant les adresses jusqu'à l'adresse supérieure.

Dans l'exemple d'utilisation de la figure 6 l'étape de modification MODIF de l'image numérique intermédiaire est réalisée en second. Cette conversion est réalisée à partir de l'adresse inférieure et en incrémentant les adresses. Les valeurs des pixels de l'image numérique convertie sont stockées de manière continue en partant de l'adresse inférieure. Ainsi l'image numérique convertie est stockée au début de la zone de la mémoire MEM.

La réalisation de l'étape de redimensionnement REDI avant l'étape de modification MODIF permet de limiter la taille de la zone mémoire MEM nécessaire au stockage des différentes images.

En effet, l'image numérique initiale présente une résolution de 320*240 et la couleur de chaque pixel est représentée par 2 octets. L'image numérique initiale a une taille de 153.6 kilooctets. L'image numérique intermédiaire présente une résolution de 224*224 et la couleur de chaque pixel est représentée par 2 octets. L'image numérique intermédiaire a une taille de 100.4 kilooctets. L'image numérique finale présente une résolution de 224*224 et la couleur de chaque pixel est représentée par 3 octets. L'image numérique convertie a une taille de 150.6 kilooctets. Cependant, afin de réaliser l'étape de modification MODIF, il est nécessaire de réserver un espace de la zone de la mémoire MEM libre de valeur dans la zone située entre l'adresse inférieure et le début de l'image numérique intermédiaire. Cette zone libre doit être configurée pour que l'image numérique convertie puisse finir au même niveau que l'image numérique intermédiaire. Cette zone libre doit être de 50 kilooctets dans l'exemple d'utilisation de la figure 6.

En conséquence pour réaliser la conversion entre une image numérique initiale de taille 153.6 kilooctets et une image numérique convertie de taille 150.6 kilooctets, le premier mode de réalisation du procédé de conversion de l'invention illustré à la figure 5 nécessite une zone de la mémoire MEM de taille 203.776 kilooctets.

Le procédé de conversion de l'invention permet de limiter la taille de la zone mémoire MEM nécessaire par rapport au procédé de conversion connu.

Dans un deuxième mode de réalisation du procédé de conversion de l'invention, l'étape de redimensionnement REDI est réalisée en parcourant la mémoire dans un premier sens et l'étape de modification MODIF est réalisée en parcourant la mémoire dans un second sens. Le premier sens est opposé au second sens.

Ce deuxième mode de réalisation du procédé de conversion de l'invention offre l'avantage de limiter la taille de la zone mémoire MEM nécessaire à la conversion de l'image numérique initiale, par rapport au premier mode de réalisation du procédé de conversion de l'invention.

Le premier sens est le parcours des adresses, en incrémentant ces adresses et le second sens est le parcours des adresses, en décrémentant ces adresses. Dans ce cas, l'image numérique initiale est stockée en continu dans la zone de la mémoire MEM de manière à ce que le début de l'image initiale soit stockée à l'adresse inférieure. L'image numérique initiale est donc stockée au début de la zone de la mémoire MEM.

Le premier sens peut correspondre au parcours des adresses, en décrémentant ces adresses et le second sens peut correspondre au parcours des adresses, en incrémentant ces adresses. Dans ce cas, l'image numérique initiale est stockée en continu dans la zone de la mémoire MEM de manière à ce que la fin de l'image initiale soit stockée à l'adresse supérieure. L'image numérique initiale est donc stockée à la fin de la zone de la mémoire MEM.

La figure 7 illustre une utilisation du deuxième mode de réalisation du procédé de conversion de l'invention. Dans cette utilisation, l'image numérique initiale est stockée au début de la zone mémoire. L'étape de redimensionnement REDI est réalisée à partir des adresses supérieures et en décrémentant les adresses. L'adresse de fin de l'image numérique intermédiaire est identique à l'adresse de fin de l'image numérique initiale.

Ainsi l'adresse de début de l'image numérique intermédiaire est plus grande que l'adresse inférieure et donc la zone de la mémoire MEM située entre l'adresse du début de l'image numérique intermédiaire et l'adresse inférieure sera libre de valeur.

Dans l'exemple d'utilisation de la figure 7, l'étape de modification MODIF est réalisée en commençant par les adresses inférieures et en incrémentant les adresses. L'adresse du début de l'image numérique convertie est avantageusement égale à l'adresse inférieure.

Le deuxième mode de réalisation du procédé de conversion ne nécessite pas la réservation d'un espace spécifique de la zone de la mémoire MEM libre de valeur dans la zone située entre l'adresse inférieure et le début de l'image numérique intermédiaire. En effet cette zone comprise entre l'adresse inférieure et le début de l'image numérique intermédiaire est par construction libre de valeur.

Ainsi pour réaliser la conversion entre une image numérique initiale de taille 153.6 kilooctets et une image numérique finale de taille 150.528 kilooctets, le deuxième mode de réalisation du procédé de conversion de la figure 5 nécessite une zone de la mémoire MEM de taille 153.6 kilooctets.

Le deuxième mode de réalisation du procédé de conversion de l'invention permet de limiter la taille de la zone mémoire MEM nécessaire par rapport au premier mode de réalisation du procédé de conversion de l'invention.

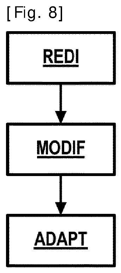

La figure 8 illustre le deuxième procédé de conversion dans le cas où il comprend également une étape d'adaptation ADAPT des données afin d'adapter l'image numérique convertie à un format de données attendue par l'entrée du réseau de neurones RN.

Cette étape d'adaptation ADAPT des données comprend deux sous étapes :
- une première sous-étape de conversion permettant de passer d'une représentation de la couleur d'un pixel sur 8-bits avec des valeurs comprises entre 0 et 255 a une autre représentation sur 8-bits avec des valeurs bornées par l'entrainement du réseau de neurone (par exemple entre 0 et 1, entre -1 et 1, ou un autre intervalle).
- une seconde sous-étape de représentation des valeurs des couleurs des pixels dans un format compatible avec le réseau de neurone (par exemple une représentation de type virgule fixe (fixed point en terminologie anglo-saxone), ou une représentation entière (scale * (q - zp)), ou autre).

## Revendications

1. Procédé de conversion d'une image numérique initiale en une image numérique convertie, l'image numérique initiale étant constituée d'un ensemble de pixels, les pixels étant associés respectivement à des couleurs, l'image numérique initiale étant acquise par un dispositif d'acquisition (ACQUI), l'image numérique initiale étant stockée dans une zone d'une mémoire (MEM), l'image numérique convertie étant utilisable par un réseau de neurones (RN), le procédé comprenant les étapes suivantes :
- redimensionnement (REDI) de l'image numérique initiale pour obtenir une image numérique intermédiaire, le redimensionnement (REDI) étant réalisé par la réduction d'un nombre de pixels de l'image initiale, les valeurs des pixels de l'image numérique intermédiaire étant écrites à la place de valeurs des pixels de l'image numérique initiale ;
- modification (MODIF) d'un format des pixels de l'image numérique intermédiaire pour obtenir l'image numérique convertie, la modification (MODIF) étant réalisée par augmentation d'un nombre de bits utilisés pour représenter la couleur du pixel, les valeurs des pixels de l'image numérique convertie étant écrites à la place de valeurs des pixels de l'image numérique initiale ou à la place de valeurs des pixels de l'image numérique intermédiaire ;
le redimensionnement (REDI) étant réalisé préalablement à la modification (MODIF), l'étape de redimensionnement (REDI) étant réalisée en parcourant la zone de mémoire dans un premier sens, l'étape de modification (MODIF) étant réalisée en parcourant la zone de mémoire dans un second sens, le premier sens étant opposé au second sens.

2. Procédé de conversion selon la revendication 1 dans lequel :
- l'image numérique initiale est stockée au début de la zone de la mémoire (MEM) ;
- le redimensionnement (REDI) est réalisé en parcourant la zone de la mémoire (MEM) et en incrémentant des adresses de la zone de la mémoire (MEM) ;
- la modification (MODIF) est réalisée en parcourant la zone de la mémoire (MEM) et en décrémentant les adresses de la zone de la mémoire (MEM).

3. Procédé de conversion selon la revendication 1 dans lequel :
- l'image numérique initiale est stockée à la fin de la zone de la mémoire (MEM) ;
- le redimensionnement (REDI) est réalisé en parcourant la zone de la mémoire (MEM) et en décrémentant des adresses de la zone de la mémoire (MEM) ;
- la modification (MODIF) est réalisée en parcourant la zone de la mémoire (MEM) et en incrémentant les adresses de la zone de la mémoire (MEM).

4. Procédé de conversion selon l'une des revendications 1 à 3 dans lequel :
- le redimensionnement (REDI) de l'image numérique initiale est réalisé par décimation des pixels de l'image numérique initiale.

5. Procédé de conversion selon l'une des revendications 1 à 3 dans lequel :
- le redimensionnement (REDI) de l'image numérique initiale est réalisé par filtrage passe-bas de l'image numérique initiale puis par décimation des pixels de l'image numérique initiale.

6. Puce électronique (PUCE) configurée pour mettre en œuvre le procédé de conversion selon l'une des revendications 1 à 5.

7. Puce électronique (PUCE) selon la revendication 6 comprenant une unité de traitement (UNIT) et une mémoire (MEM),
l'unité de traitement (UNIT) étant configurée pour mettre en œuvre le procédé de conversion selon l'une des revendications 1 à 5.

8. Système (SYST) comprenant :
- un dispositif d'acquisition (ACQUI) d'une image numérique initiale,
- un réseau de neurones (RN) utilisant une image numérique convertie,
- une puce électronique (PUCE) selon la revendication 6 ou 7 apte à la conversion de l'image numérique initiale en l'image numérique convertie.

9. Produit programme d'ordinateur comprenant des instructions de code de programme qui lorsqu'elles sont exécutées par une puce électronique (PUCE) permettent la mise en œuvre du procédé de conversion selon l'une des revendications 1 à 5.

## Patentansprüche

1. Verfahren zur Umwandlung eines ursprünglichen digitalen Bildes in ein umgewandeltes digitales Bild, wobei das ursprüngliche digitale Bild aus einer Reihe von Pixeln besteht, wobei die Pixel jeweils mit Farben verbunden sind, wobei das ursprüngliche digitale Bild von einer Erfassungsvorrichtung (ACQUI) erfasst wird, wobei das ursprüngliche digitale Bild in einem Bereich eines Speichers (MEM) gespeichert wird, wobei das umgewandelte digitale Bild von einem Neuronennetzwerk (RN) nutzbar ist, wobei das Verfahren die folgenden Schritte umfasst:
- Neuskalierung (REDI) des ursprünglichen digitalen Bildes, um ein digitales Zwischenbild zu erhalten, wobei die Neuskalierung (REDI) durch Reduzierung einer Anzahl von Pixeln des ursprünglichen Bildes durchgeführt wird, wobei die Pixelwerte des digitalen Zwischenbildes anstelle der Pixelwerte des ursprünglichen digitalen Bildes geschrieben werden;
- Änderung (MODIF) eines Pixelformats des digitalen Zwischenbildes, um das umgewandelte digitale Bild zu erhalten, wobei die Änderung (MODIF) durch Erhöhen einer Anzahl von Bits durchgeführt wird, die verwendet werden, um die Farbe des Pixels darzustellen, wobei die Pixelwerte des umgewandelten digitalen Bildes anstelle von Pixelwerten des ursprünglichen digitalen Bildes oder anstelle von Pixelwerten des digitalen Zwischenbildes geschrieben werden;
wobei die Neuskalierung (REDI) vor der Änderung (MODIF) durchgeführt wird, wobei der Schritt der Neuskalierung (REDI) durchgeführt wird, indem der Speicherbereich in einer ersten Richtung durchlaufen wird, wobei der Änderungsschritt (MODIF) durchgeführt wird, indem der Speicherbereich in einer zweiten Richtung durchlaufen wird, wobei die erste Richtung der zweiten Richtung entgegengesetzt ist.

2. Umwandlungsverfahren nach Anspruch 1, wobei:
- das ursprüngliche digitale Bild am Anfang des Speicherbereichs (MEM) gespeichert wird;
- die Neuskalierung (REDI) durch Durchlaufen des Speicherbereichs (MEM) und Inkrementieren von Adressen des Speicherbereichs (MEM) erfolgt;
- die Änderung (MODIF) durch Durchlaufen des Speicherbereichs (MEM) und Dekrementieren der Adressen des Speicherbereichs (MEM) erfolgt.

3. Umwandlungsverfahren nach Anspruch 1, wobei:
- das ursprüngliche digitale Bild am Ende des Speicherbereichs (MEM) gespeichert wird;
- die Neuskalierung (REDI) durch Durchlaufen des Speicherbereichs (MEM) und Dekrementieren von Adressen des Speicherbereichs (MEM) erfolgt;
- die Änderung (MODIF) durch Durchlaufen des Speicherbereichs (MEM) und Inkrementieren der Adressen des Speicherbereichs (MEM) erfolgt.

4. Umwandlungsverfahren nach einem der Ansprüche 1 bis 3, wobei:
- die Neuskalierung (REDI) des ursprünglichen digitalen Bildes durch Dezimieren der Pixel des ursprünglichen digitalen Bildes erfolgt.

5. Umwandlungsverfahren nach einem der Ansprüche 1 bis 3, wobei:
- die Neuskalierung (REDI) des ursprünglichen digitalen Bildes durch Tiefpassfilterung des ursprünglichen digitalen Bildes und anschließend durch Dezimieren der Pixel des ursprünglichen digitalen Bildes erfolgt.

6. Elektronischer Chip (PUCE), der so konfiguriert ist, dass er das Umwandlungsverfahren nach einem der Ansprüche 1 bis 5 umsetzt.

7. Elektronischer Chip (PUCE) nach Anspruch 6, umfassend eine Verarbeitungseinheit (UNIT) und einen Speicher (MEM), wobei die Verarbeitungseinheit (UNIT) so konfiguriert ist, dass sie das Umwandlungsverfahren nach einem der Ansprüche 1 bis 5 umsetzt.

8. System (SYST), umfassend:
- eine Vorrichtung zur Erfassung (ACQUI) eines ursprünglichen digitalen Bildes,
- ein Neuronennetzwerk (NG), das ein umgewandeltes digitales Bild verwendet,
- einen elektronischen Chip (PUCE) nach Anspruch 6 oder 7, der zur Umwandlung des ursprünglichen digitalen Bildes in das umgewandelte digitale Bild geeignet ist.

9. Computerprogrammprodukt, das Programmcodeanweisungen umfasst, die, wenn sie von einem elektronischen Chip (PUCE) ausgeführt werden, die Umsetzung des Konvertierungsverfahrens nach einem der Ansprüche 1 bis 5 ermöglichen.

## Claims

1. A method for converting an initial digital image into a converted digital image, the initial digital image consisting of a set of pixels, the pixels being associated respectively with colours, the initial digital image being acquired by an acquisition device (ACQUI), the initial digital image being stored in an area of a memory (MEM), the converted digital image being usable by a neural network (RN), the method comprising the following steps:
- resizing (REDI) the initial digital image to obtain an intermediate digital image, the resizing (REDI) being carried out by reducing a number of pixels of the initial image, the values of the pixels of the intermediate digital image being written in place of the values of the pixels of the initial digital image;
- modifying (MODIF) a format of the pixels of the intermediate digital image to obtain the converted digital image, the modification (MODIF) being carried out by increasing a number of bits used to represent the colour of the pixel, the values of the pixels of the converted digital image being written in place of values of the pixels of the initial digital image or in place of values of the pixels of the intermediate digital image;
the resizing (REDI) being carried out prior to the modification (MODIF), the resizing step (REDI) being carried out by travelling the memory area in a first direction, the modification step (MODIF) being carried out by travelling the memory area in a second direction, the first direction being opposite to the second direction.

2. The conversion method according to claim 1, wherein:
- the initial digital image is stored at the beginning of the memory area (MEM);
- the resizing (REDI) is carried out by travelling the memory area (MEM) and incrementing addresses of the memory area (MEM);
- the modification (MODIF) is carried out by travelling the memory area (MEM) and decrementing the addresses of the memory area (MEM).

3. The conversion method according to claim 1, wherein:
- the initial digital image is stored at the end of the memory area (MEM);
- the resizing (REDI) is carried out by travelling the memory area (MEM) and decrementing addresses of the memory area (MEM);
- the modification (MODIF) is carried out by travelling the memory area (MEM) and incrementing the addresses of the memory area (MEM).

4. The conversion method according to any one of claims 1 to 3, wherein:
- the resizing (REDI) of the initial digital image is carried out by decimating the pixels of the initial digital image.

5. The conversion method according to any one of claims 1 to 3, wherein:
- the resizing (REDI) of the initial digital image is carried out by low-pass filtering of the initial digital image then by decimating the pixels of the initial digital image.

6. An electronic chip (PUCE) configured to implement the conversion method according to any one of claims 1 to 5.

7. The electronic chip (PUCE) according to claim 6 comprising a processing UNIT (UNIT) and a memory (MEM), the processing UNIT (UNIT) being configured to implement the conversion method according to any one of claims 1 to 5.

8. A system (SYST) comprising:
- a device (ACQUI) for acquiring an initial digital image,
- a neural network (RN) using a converted digital image,
- an electronic chip (PUCE) according to claim 6 or 7 capable of converting the initial digital image into the converted digital image.

9. A computer program product comprising program code instructions which, when executed by an electronic chip (PUCE), enable the implementation of the conversion method according to any one of claims 1 to 5.
